# EUROPÄISCHE PATENTSCHRIFT

(11) **EP 2 450 260 B1**
(45) Veröffentlichungstag und Bekanntmachung des Hinweises auf die Patenterteilung: **17.10.2018**
(21) Anmeldenummer: 11008685.7
(22) Anmeldetag: 29.10.2011
(51) Int. Cl.: B62D 5/04

(54) **Vorrichtung zum Ansteuern eines Elektromotors für eine elektrische Hilfskraftlenkung**
Device for controlling an electric motor for an electric power steering system
Dispositif de commande d'un moteur électrique pour une direction assistée électrique

(30) Priorität: 09.11.2010 DE 102010050819
(43) Veröffentlichungstag der Anmeldung: 09.05.2012
(73) Patentinhaber: Audi AG, 85045 Ingolstadt (DE)
(72) Erfinder: Müller, Rolf, 85055 Ingolstadt (DE); Schuller, Jürgen, Dr., 85055 Ingolstadt (DE)
(74) Vertreter: Patzelt, Heike Anna Maria

(56) Entgegenhaltungen:
- EP-A2- 1 588 924
- WO-A1-02/32742
- DE-A1-102008 025 382

## Beschreibung

Die Erfindung betrifft eine Vorrichtung zum Ansteuern eines Elektromotors für eine elektrische Hilfskraftlenkung in einem Kraftfahrzeug sowie ein Kraftfahrzeug mit einer solchen Vorrichtung.
Aufgabe einer Hilfskraftlenkung ist es, ein unterstützendes Drehmoment zur Verfügung zu stellen, das gemeinsam mit dem von einem Fahrzeugführer an einer Lenkhandhabe aufgebrachten Lenkmoment zu einer Auslenkung von zumindest einem Rad des Kraftfahrzeugs führt. Bei der elektrischen Hilfskraftlenkung wird das zusätzliche Drehmoment von einem Elektromotor aufgebracht.
Bei elektrischen Hilfskraftlenkungen können elektrische Komponenten ausfallen, was sich unmittelbar auf die Steuerung des Kraftfahrzeugs auswirkt, anders als etwa bei einer pneumatischen oder hydraulischen Hilfskraftlenkung.

Die DE 10 2008 025 382 A1 ist der nächstliegende Stand der Technik und offenbart ein Lenkungssteuersystem, welches mit einem Motor, insbesondere einem Elektromotor, verbindbar ist, der konfiguriert ist, eine Lenkung zu steuern. Die Vorrichtung nach Patentanspruch 1 unterscheidet sich von der Vorrichtung nach der DE 10 2008 025382 A1 darin, dass die zweite Datenverarbeitungseinrichtung dauerhaft Teil des Signalpfades von der ersten Datenverarbeitungseinrichtung zum Elektromotor ist

Der Elektromotor wird üblicherweise von einer Datenverarbeitungseinrichtung angesteuert. Es ist bekannt, dass bei einem Ausfall dieser Datenverarbeitungseinrichtung andere Einrichtungen an deren Stelle treten können. So beschreibt beispielsweise die DE 10 2008 048 952 A1 eine Vorrichtung zur Steuerung einer elektrischen Lenkung, bei der ein Haupt-Rechner eine Leistungselektronik ansteuert. Es gibt einen Sensor zur Erfassung eines Drehmoments an einer Lenkstange. Die Sensordaten werden dem Hauptrechner nicht unmittelbar zur Verfügung gestellt, sondern lediglich mittelbar, nämlich von einem weiteren Rechner aufbereitet. Dieser weitere Rechner kann bei einem Fehler des Haupt-Rechners die Leistungselektronik für einen Notlaufbetrieb ansteuern.
Es ist Aufgabe der vorliegenden Erfindung, eine Vorrichtung zum Ansteuern eines Elektromotors für eine elektrische Hilfskraftlenkung im Hinblick auf einen Notlaufbetrieb weiter zu verbessern.
Die Aufgabe wird durch eine Vorrichtung mit den Merkmalen des Patentanspruchs 1 gelöst, genauso auch durch ein Kraftfahrzeug mit den Merkmalen des Patentanspruchs 6.
Bei der erfindungsgemäßen Vorrichtung empfängt somit eine erste Datenverarbeitungseinrichtung zumindest mittelbar Signale von zumindest einem Sensor, und sie gibt Steuersignale ab. Eine zweite Datenverarbeitungseinrichtung empfängt die Steuersignale von der ersten Datenverarbeitungseinrichtung und gibt diese an eine weitere Einheit oder Einrichtung weiter. Die zweite Datenverarbeitungseinrichtung empfängt ebenfalls Signale von dem zumindest einen Sensor, und sie ist ausgelegt, bei einem Defekt oder Ausfall der ersten Datenverarbeitungseinrichtung an deren Stelle zu treten und eigenständig Steuersignale abzugeben.

Die Vorrichtung nach Patentanspruch 1 unterscheidet sich unter anderem von der Vorrichtung nach der DE 10 2008 048 952 A1 darin, dass die zweite Datenverarbeitungseinrichtung dauerhaft Teil des Signalpfades von der ersten Datenverarbeitungseinrichtung zum Elektromotor ist. Bei einem Ausfall der ersten Datenverarbeitungseinrichtung muss die zweite Datenverarbeitungseinrichtung daher nicht zugeschaltet werden, sondern kann selbständig, von sich aus, umschalten. Es müssen insbesondere keine Schalteinrichtungen außerhalb der Datenverarbeitungseinrichtungen betätigt werden.

Die zweite Datenverarbeitungseinrichtung kann an zumindest einen Sensor unmittelbar, direkt, gekoppelt sein, und sie kann im herkömmlichen Betrieb die Sensorsignale an die erste Datenverarbeitungseinrichtung übermitteln, gegebenenfalls in aufbereiteter Form. Die erste Datenverarbeitungseinrichtung empfängt dann die Signale von zumindest diesem Sensor dann in der Regel nicht unmittelbar, sondern lediglich mittelbar. Die zweite Datenverarbeitungseinrichtung nimmt daher beim herkömmlichen Betrieb der Vorrichtung eine bestimmte Aufgabe wahr. Ihre (Rechen-)Kapazität wird daher dauerhaft sinnvoll genutzt. Wie von weiteren Datenverarbeitungseinrichtungen her an sich bekannt, weist bevorzugt auch die zweite Datenverarbeitungseinrichtung eine geringere Rechenkapazität auf (bzw. stellt diese bereit) als die erste Datenverarbeitungseinrichtung. Zum Bereitstellen der Steuersignale ist im Rahmen eines Notlaufbetriebs nicht eine so hohe Präzision notwendig, wie es durch die erste Datenverarbeitungseinrichtung möglich ist. Es ist eine Frage der Kosteneffizienz und des Platzverbrauchs, welche Kapazität man für die zweite Datenverarbeitungseinrichtung bereitstellt; eine geringe Kapazität führt zu Ersparnis an Kosten und Raum.

Bevorzugt umfasst die weitere Einheit eine Einrichtung zum Wandeln, welche im Betrieb die von der zweiten Datenverarbeitungseinrichtung empfangenen Steuersignale in Steuersignale für Schaltelemente, insbesondere Transistoren wandelt. In der Schaltungsanordnung nachgeordnet sind dann eben solche Transistoren, die die Steuersignale von der Einheit zum Wandeln empfangen können und im Betrieb die Abgabe von Steuersignalen an den Elektromotor bewirken. Die weitere Einheit lässt sich auch gemäß den Gepflogenheiten auf dem Fachgebiet als "Leistungselektronik" bezeichnen.

Die zweite Datenverarbeitungseinrichtung ist bevorzugt in einfacher Weise als anwendungsspezifischer integrierter Schaltkreis ausgebildet oder umfasst zumindest einen solchen. Ein anwendungsspezifischer integrierter Schaltkreis, auf Englisch "ASIC", für "application specific integrated circuit" bezeichnet, kann einfache Aufgaben übernehmen, wie sie für einen Notlaufbetrieb ausreichend sind.

Das erfindungsgemäße Kraftfahrzeug weist die Vorrichtung gemäß Patentanspruch 1 auf, insbesondere auch eine bevorzugte Ausführungsform derselben.

Nachfolgend wird eine bevorzugte Ausführungsform der Erfindung unter Bezug auf die Zeichnung näher erläutert, in der
- Fig. 1: ein schematisches Schaubild eines elektronischen Steuergeräts als erfindungsgemäßer Vorrichtung ist, an das ein Elektromotor und Sensoren angekoppelt sind, und
- Fig. 2: ein Flussschaubild zur Erläuterung der Vorgehensweise des anwendungsspezifischen integrierten Schaltkreises aus dem Steuergerät aus Fig. 1 ist.

Bei einer elektrischen Hilfskraftlenkung in einem in der Figur nicht gezeigten Kraftfahrzeug stellt ein Elektromotor M ein unterstützendes Moment bereit. Der Elektromotor M wird von einem Steuergerät 10 mit Steuersignalen beaufschlagt. Das Steuergerät 10 empfängt seinerseits Signale von Sensoren S1 und S2.

Der Sensor S1 misst das an einer Lenkhandhabe des Kraftfahrzeugs aufgebrachte Lenkmoment. Der Sensor S2 misst die Winkelstellung (Drehlage) eines Rotors des Elektromotors M.

Der Haupt-Rechner 12 empfängt unmittelbar nur die Messwerte vom Sensor S1. Die Messwerte vom Sensor S2 werden hingegen zunächst einem anwendungsspezifischen integrierten Schaltkreis 14 zugeführt. Dieser empfängt zusätzlich auch die Messwerte vom Sensor S1 und leitet ein Signal an den Haupt-Rechner weiter, im einfachsten Fall wird einfach der Messwert vom Sensor S2 weitergegeben. Aufgabe des Haupt-Rechners ist es, die Ansteuerung des Elektromotors M zu bewirken. Zu diesem Zweck bereitet der Haupt-Rechner die ihm zugeführten Messwerte vom Sensor S1 und Sensor S2 auf (bzw. die Messwerte vom Sensor S1 und ein aufbereitetes Signal vom Schaltkreis 14) und gibt Steuersignale ab. Die Steuersignale werden nun nicht unmittelbar einer Leistungselektronik zugeführt, sondern über den anwendungsspezifischen integrierten Schaltkreis 14 einer solchen Leistungselektronik 16 zugeführt. Die Leistungselektronik 16 umfasst eine Einrichtung 18 zum Wandeln der Steuersignale in Steuerbefehle für Transistoren 20, die sich dem Signalpfad zum Elektromotor anschließen. Die Einrichtung 18 bezeichnet man auch als "GDU", für englisch "Gate Drive Unit".

Der Haupt-Rechner 12 wird von einem Überwachungsrechner 22, der als Mikrocontroller ausgebildet sein kann, in an sich bekannter Weise überwacht.

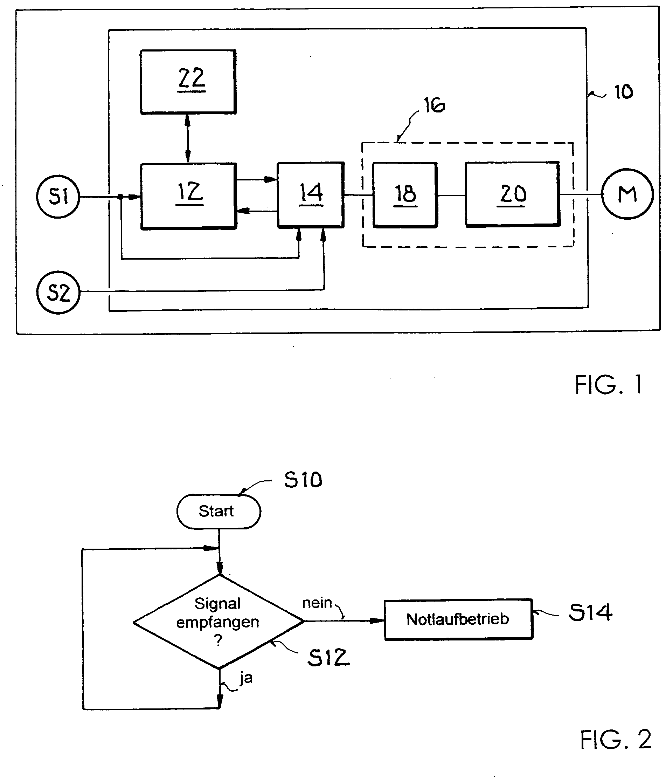

Fig. 2 stellt nun dar, wie sich der anwendungsspezifische integrierte Schaltkreis 14 verhält. Nach einem Start in Schritt S10 überprüft der anwendungsspezifische integrierte Schaltkreis 14 in Schritt S12, ob Steuersignale vom Haupt-Rechner 12 überhaupt empfangen werden. Solange dies der Fall ist, erfolgt die Überprüfung in dem Schritt S12 dauerhaft bzw. immer wieder. Wenn kein Steuersignal empfangen wird, dann heißt dies, dass der Haupt-Rechner nicht oder nicht ordnungsgemäß funktioniert. In diesem Falle wird in Schritt S14 ein Notlaufbetrieb begonnen. Der anwendungsspezifische integrierte Schaltkreis ist in der Lage, selbst solche Steuersignale abzugeben, wie er sie üblicherweise an die Leistungselektronik 16 weiterleitet. Er bereitet hierzu die Signale von den Sensoren S1 und S2 auf, welche er ja empfängt, wobei ein vom Schaltkreis 14 verwendeter Algorithmus durchaus einfacher, weniger komplex, sein kann, als es ein vom Haupt-Rechner 12 verwendeter Algorithmus ist.

Der anwendungsspezifische integrierte Schaltkreis 14 tritt daher im Notlauf an die Stelle des Haupt-Rechners 12. Kennzeichen der Anordnung aus Fig. 1 ist es insbesondere, dass der anwendungsspezifische Schaltkreis 14 im Signalpfad zwischen dem Haupt-Rechner und der Leistungselektronik 16. angeordnet ist.

## Patentansprüche

1. Vorrichtung (10) zum Ansteuern eines Elektromotors (M) für eine elektrische Hilfskraftlenkung, mit einer ersten Datenverarbeitungseinrichtung (12), die Signale von zumindest einem Sensor (S1, S2) empfängt und Steuersignale abgibt, und mit einer zweiten Datenverarbeitungseinrichtung (14), die die Steuersignale von der ersten Datenverarbeitungseinrichtung empfängt und an eine weitere Einheit (16) weitergibt, sodass die zweite Datenverarbeitungseinrichtung (14) dauerhaft Teil eines Signalpfades von der ersten Datenverarbeitungseinrichtung (12) zum Elektromotor (M) ist, wobei die zweite Datenverarbeitungseinrichtung (14) ebenfalls Signale von zumindest einem Sensor (S1, S2) empfängt und ausgelegt ist, bei einem Defekt oder Ausfall der ersten Datenverarbeitungseinrichtung (12) an deren Stelle zu treten und eigenständig Steuersignale abzugeben.

2. Vorrichtung (10) nach Anspruch 1, bei der die zweite Datenverarbeitungseinrichtung (14) mit zumindest einem Sensor (S1, S2) unmittelbar gekoppelt ist und dessen Sensorsignale an die erste Datenverarbeitungseinrichtung (12) übermittelt.

3. Vorrichtung (10) nach Anspruch 1 oder 2, bei der die zweite Datenverarbeitungseinrichtung eine geringere Rechenkapazität aufweist als die erste Datenverarbeitungseinrichtung (12).

4. Vorrichtung (10) nach einem der vorhergehenden Ansprüche, bei der die weitere Einheit eine Einrichtung (18) zum Wandeln umfasst, die die von der zweiten Datenverarbeitungseinrichtung (14) empfangenen Steuersignale in Steuersignale für Transistoren (20) wandelt, und mit Transistoren (20), die die Steuersignale von der Einheit (18) zum Wandeln empfangen und die Abgabe von Steuersignalen an den Elektromotor (M) bewirken.

5. Vorrichtung (10) nach einem der vorhergehenden Ansprüche, bei der die zweite Datenverarbeitungseinrichtung (14) einen anwendungsspezifischen integrierten Schaltkreis umfasst.

6. Kraftfahrzeug mit einer Vorrichtung (10) nach einem der vorhergehenden Ansprüche.

## Claims

1. Device (10) for controlling an electric motor (M) for an electric power steering system, having a first data-processing device (12), which receives signals from at least one sensor (S1, S2) and delivers control signals, and having a second data-processing device (14), which receives the control signals from the first data-processing device and relays them to a further unit (16), such that the second data-processing device (14) is permanently part of a signal path from the first data-processing device (12) to the electric motor (M), whereby the second data-processing device (14) likewise receives signals from at least one sensor (S1, S2) and is designed, in the event of a defect or failure of the first data-processing device (12), to take the place of said device and deliver control signals independently.

2. Device (10) according to claim 1, in which the second data-processing device (14) is coupled directly with at least one sensor (S1, S2) and transmits the sensor signals of the latter to the first data-processing device (12).

3. Device (10) according to claim 1 or 2, in which the second data-processing device has a smaller computing capacity than the first data-processing device (12).

4. Device (10) according to any one of the preceding claims, in which the further unit comprises a device (18) for conversion, which converts the control signals received from the second data-processing device (14) into control signals for transistors (20), and having transistors (20), which receive the control signals from the unit (18) for conversion and bring about the delivery of control signals to the electric motor (M).

5. Device (10) according to any one of the preceding claims, in which the second data-processing device (14) comprises an application-specific integrated circuit.

6. Motor vehicle having a device (10) according to any one of the preceding claims.

## Revendications

1. Dispositif (10) de commande d'un moteur électrique (M) pour une direction assistée électrique, avec un premier dispositif de traitement de données (12), qui reçoit des signaux d'au moins un capteur (S1, S2) et émet des signaux de commande, et avec un deuxième dispositif de traitement de données (14), qui reçoit les signaux de commande du premier dispositif de traitement de données et les transmet à une autre unité (16), de sorte que le deuxième dispositif de traitement de données (14) fasse durablement partie d'un cheminement de signal du premier dispositif de traitement de données (12) au moteur électrique (M), dans lequel le deuxième dispositif de traitement de données (14) reçoit également des signaux d'au moins un capteur (S1, S2) et est conçu, en cas de défaut ou de panne du premier dispositif de traitement de données (12), pour prendre sa place et émettre automatiquement des signaux de commande.

2. Dispositif (10) selon la revendication 1, dans lequel le deuxième dispositif de traitement de données (14) est couplé directement à au moins un capteur (S1, S2) et transmet ses signaux de capteur au premier dispositif de traitement de données (12).

3. Dispositif (10) selon la revendication 1 ou 2, dans lequel le deuxième dispositif de traitement de données présente une capacité de calcul inférieure à celle du premier dispositif de traitement de données (12).

4. Dispositif (10) selon l'une quelconque des revendications précédentes, dans lequel l'autre unité comprend un dispositif (18) de conversion, qui convertit les signaux de commande reçus du deuxième dispositif de traitement de données (14) en signaux de commande pour des transistors (20), et avec des transistors (20), qui reçoivent les signaux de commande de l'unité (18) pour la conversion et entraînent l'émission de signaux de commande au moteur électrique (M).

5. Dispositif (10) selon l'une quelconque des revendications précédentes, dans lequel le deuxième dispositif de traitement de données (14) comprend un circuit intégré propre à l'application.

6. Véhicule automobile avec un dispositif (10) selon l'une quelconque des revendications précédentes.
